Europäisches Patentamt

European Patent Office

Office européen des brevets

(11) Veröffentlichungsnummer : **0 069 799**
**B1**

(12) **EUROPÄISCHE PATENTSCHRIFT**

(45) Veröffentlichungstag der Patentschrift :
05.06.85

(51) Int. Cl.⁴ : **B 62 D 55/20**

(21) Anmeldenummer : 81106061.5

(22) Anmeldetag : 03.08.81

(54) Scharniergelenk einer Gleiskette.

(30) Priorität : 09.07.81 DE 3127104

(43) Veröffentlichungstag der Anmeldung :
19.01.83 Patentblatt 83/03

(45) Bekanntmachung des Hinweises auf die Patenterteilung : 05.06.85 Patentblatt 85/23

(84) Benannte Vertragsstaaten :
FR GB IT SE

(56) Entgegenhaltungen :
WO-A-79 /009 66
DE-A- 2 840 219
DE-C- 2 210 466
FR-A- 2 394 439
GB-A- 726 484
GB-A- 1 552 156
GB-A- 2 014 115
US-A- 2 783 909

(73) Patentinhaber : Intertractor Viehmann GmbH. & Co
Hagenerstrasse 325
D-5820 Gevelsberg (DE)

(72) Erfinder : Harms, Hans-Wilhelm, Dr.
Berliner Strasse 58
D-4030 Ratingen (DE)

(74) Vertreter, : Köchling, Conrad, Dipl.-Ing. et ai
Patentanwälte, Dipl.-Ing. Conrad Köchling Dipl.-Ing.
Conrad-Joachim Köchling Fleyer Strasse 135
D-5800 Hagen 1 (DE)

## Beschreibung

Die Erfindung betrifft ein Scharniergelenk einer Gleiskette mit einer abgedichteten und geschmierten Lagervorrichtung, die mindestens zwei Glieder schwenkbar verbindet, wobei ein Bolzen und eine diesen aufnehmende und auf dessen Außenfläche gleitende Buchse vorgesehen ist, ferner die zwischen Bolzen und Buchse vorgesehene Lagerfläche mit einem in der Lagervorrichtung angeordneten von außen zugänglichen Schmiermittelreservoir verbunden ist, dessen offenes Ende durch einen elastischen, mit einem Kanal versehenen Stopfen verschließbar ist.

Ein derartiges Scharniergelenk ist beispielsweise aus der DE-PS 22 10 466 bekannt.

Hierbei erfolgt die Abdichtung des Schmiermittelreservoirs durch einen gelochten elastischen Stopfen, welcher nach Befüllung mit Schmiermittel durch einen weiteren elastischen Stopfen oder dergl. verschlossen werden muß.

Diese Ausbildung hat zum Nachteil, daß einerseits zwei unterschiedliche Teile gefertigt und montiert werden müssen, um die gewünschte Abdichtung zu erreichen, daß andererseits aber auch sich beim Einsetzen des Hilfsstopfens unter diesem ein durch das Einschieben des Hilfsstopfens vorgespanntes Luftpolster bildet, welches dazu führen kann, daß der Hilfsstopfen wieder aus der entsprechenden Bohrung des Hauptstopfens herausgedrückt wird.

Hiervon ausgehend liegt der Erfindung die Aufgabe zugrunde, ein Scharniergelenk der eingangs beschriebenen Art zu schaffen, bei welchem die Abdichtung mittels eines einzigen Verschlußgliedes erfolgen kann, aber dennoch gewährleistet ist, daß die Ausbildung eines vorgespannten Luftpolsters vor diesem Stopfen auf jeden Fall unterbunden ist.

Zur Lösung dieser Aufgabe schlägt die Erfindung vor, daß der Kanal nur über einen Teil der Länge des Stopfens verläuft und nur außenliegend offen mündet, und daß das innenliegende sacklochartige Ende des Kanales mit einem von dort bis zum innenliegenden Stopfenende verlaufenden, mindestens annähernd über die gesamte Stopfenbreite ausgebildeten Schlitz in Verbindung steht, wobei die den Schlitz bildenden Stopfenflächen bei in das offene Ende des Schmiermittelreservoirs eingesetztem Stopfen fest aufeinander gepreßt sind.

Die Befüllöffnung des Schmiermittelreservoirs kann mit Hilfe dieses Stopfens nach Befüllen des Schmiermittelreservoirs verschlossen werden, wobei vorteilhafterweise in den Stopfen eine dessen Kanal und Schlitz durchdringende Kanüle oder dergl. eingesetzt wird, die ein beim Eindrücken des Stopfens sich ausbildendes Luftpolster nach außen entweichen läßt. Diese Kanüle wird anschließend aus dem Kanal bzw. Schlitz des Stopfens herausgezogen, wonach der Stopfen ohne innere Vorspannung in der entsprechenden abzudichtenden Öffnung liegt.

Desweiteren ist auch möglich, erst nach Einsetzen des Stopfens Schmiermittel in das Schmiermittelreservoir einzubringen, in dem entweder durch eine Doppel-Kanüle Schmiermittel eingefügt wird, wobei die eine Kanüle als Schmiermittelzuführung und die andere als Entlüftung dient, oder aber zunächst Vakuum im Schmiermittelreservoir gezogen wird und dann Schmiermittel zugeführt wird, wobei das Schmiermittel zumindest teilweise durch das Vakuum selbsttätig eingesaugt wird.

Durch die Ausbildung des Schlitzes ist gewährleistet, daß eine hervorragende Abdichtung erfolgt, da die von dem Schlitz durchtrennten Stopfenflächen mit ausreichender Vorspannung aneinanderliegen und den Durchtritt von Schmiermittel verhindern.

Vorzugsweise ist vorgesehen, daß der Bolzen eine das Schmiermittelreservoir bildende, einseitig offene Bohrung aufweist, die über einen Querkanal mit der Lagerfläche verbunden ist, und der Stopfen in die Mündung der Bohrung eingepreßt ist.

Desweiteren hat sich als vorteilhaft herausgestellt, daß der Stopfen konisch ausgebildet und mit dem verjüngten Ende voraus in die Öffnung bzw. Mündung eingesetzt ist, wobei der Stopfen in der Einbaulage mindestens fast vollkommen zylindrisch verformt ist.

Durch die Ausbildung ist einerseits das Einstecken des Stopfens erleichtert, da das konisch verjüngte Ende als Führung beim Einführen des Stopfens in die entsprechende zu verschließende Bohrungsmündung dient.

Andererseits ist aber durch die erhebliche Vorspannung des Stopfens nach dem Einschieben in die Mündung der Bohrung sichergestellt, daß eine ausreichende und gute Abdichtung erfolgt.

Unter Umständen ist bevorzugt, daß der Stopfen vom innenliegenden Ende her in der Schlitzlänge entsprechender Länge einen relativ großen Konuswinkel bildet, im folgenden Bereich mindestens einen sehr flachen Konuswinkel aufweist und im mündungsnahen Bereich entgegengesetzt konisch sich außen verjüngend ausgebildet ist.

Auf diese Weise werden Zonen unterschiedlicher Vorspannung über die Stopfenlänge erzeugt, was das Einführen bzw. Durchführen eines zur Befüllung dienenden Organes durch die Bohrung bzw. den Schlitz erleichtert und dennoch vorallem im Mittelbereich des Stopfens eine auf jeden Fall ausreichende Vorspannung zur Halterung des Stopfens in der Bohrung gewährleistet.

Zur Erleichterung des Einführens eines die Befüllung bzw. Entlüftung besorgenden Organes durch den Schlitz ist vorteilhaft, daß der Kanal zum Schlitz hin, mindestens im unmittelbar anschließenden Bereich kegelförmig ausläuft. Desweiteren ist vorteilhaft, daß der Schlitz vor der Stopfenseitenwandung endet.

Hierdurch ist gewährleistet, daß beim Einschieben des Stopfens in die entsprechende Bohrung keine Verformung des Schlitzes in dem Bereich erfolgt, in welchem der Schlitz bei durchgehender Schlitzung mit der Bohrungswandung korrespondieren würde. Der Stopfen bildet vielmehr außen eine glatte durchgehende Fläche, so daß beim Einschieben auf jeden Fall eine ordnungsgemäße Anordnung und Ausrichtung des Schlitzes erfolgen kann.

Zur Erleichterung der Fertigung ist weiter vorgesehen, daß der Schlitz endseitig über einen Teil seiner Länge zu einem ovalen Sackloch aufgeweitet ist.

Hierdurch läßt sich der Stopfen leichter fertigen, indem in einem einzigen Arbeitsgang auch der Schlitz ausgebildet wird, wobei die Seitenwände des ovalen Sackloches als Führung für ein entsprechendes Schneidwerkzeug dienen, welches den Schlitz vorsieht.

Vorzugsweise ist vorgesehen, daß in den Kanal und den Schlitz eine Kanüle den Stopfen axial durchdringend, entfernbar eingesetzt ist, die außenliegend eine Druckmittelleitungs-Kupplung aufweist.

Diese Anordnung hat zum Vorteil, daß die Kanüle nicht nachträglich nach schon vorgespanntem Stopfen eingesteckt werden muß, sondern daß diese lediglich nach dem Einschieben des Stopfens und nach Befüllen des Schmiermittelreservoirs herausgezogen werden muß. Es hat sich als vorteilhaft erwiesen, daß der Stopfen aus elastischem Gummi besteht.

Ausführungsbeispiele der Erfindung sind in der Zeichnung dargestellt und werden im folgenden näher beschrieben.

Es zeigt :

Figur 1   ein Scharniergelenk einer Gleiskette im Schnitt ;

Figur 2   den in Fig. 1 dargestellten Stopfen in entspannter Lage vor dem Einsetzen in die Bohrung des Schmiermittelreservoirs ;

Figur 3   den Stopfen von vorn gesehen ;

Figur 4   eine Variante des Stopfens in Seitenansicht im Schnitt, gemäß Fig. 2 gesehen ;

Figur 5   den Stopfen in der Ansicht gemäß Fig. 3 ;

Figur 6   eine weitere Variante, wie Fig. 4 gesehen ;

Figur 7   die Variante in der Ansicht gemäß Fig. 5.

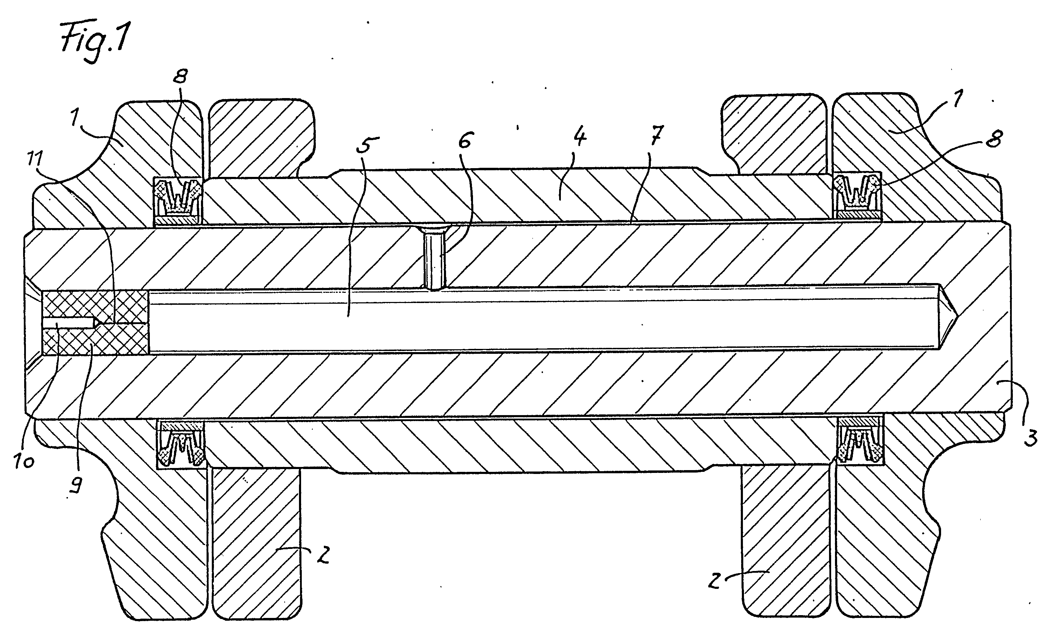

In Fig. 1 ist schematisch ein Scharniergelenk einer Gleiskette mit einer abgedichteten und geschmierten Lagervorrichtung gezeigt. Das Scharniergelenk einschl. der Kettenglieder besteht im wesentlichen aus zwei äußeren Kettengliedern 1, zwei inneren Kettengliedern 2, einem Bolzen 3 und einer Buchse 4.

Die Kettenglieder 1 sind mit dem Bolzen 3 beispielsweise in Form einer Schrumpfverbindung verbunden, während die Kettenglieder 2 in entsprechender Weise mit der Buchse 4 verbunden sind. Der Bolzen 3 weist eine einseitig nach außen offene Bohrung 5 auf, die als Schmiermittelreservoir dient.

Die Bohrung 5 ist über einen Querkanal 6 mit einem Spalt 7 zwischen der Buchse 4 und dem Bolzen 3 verbunden, welcher Spalt wiederum in Verbindung mit Dichtungen 8 steht, die in den Kettengliedern 1 angeordnet sind.

Die Dichtungen 8 verhindern den Schmiermittel-Austritt nach außen.

Die Bohrung 5 ist mündungsseitig konisch erweitert und in die Mündung ist ein Stopfen 9 unter materialeigener Vorspannung eingesetzt.

Der Stopfen 9 weist von der außenliegenden Mündungsseite her einen über etwa die.Hälfte seiner Länge verlaufenden zylindrischen Kanal 10 auf, der in einen zum Inneren der Bohrung 5 hinliegenden Schlitz 11 mündet. Gemäß Ausführungsbeispiel in Fig. 1 bis 5 verläuft der Schlitz 11 über die gesamte Stopfenbreite.

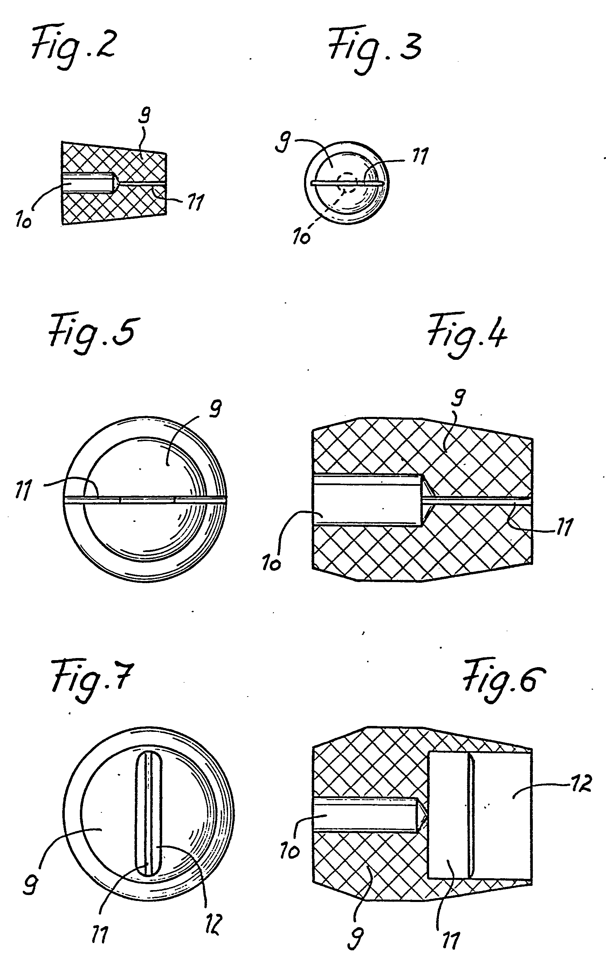

Wie aus den Figuren 2 bis 5 ersichtlich, weisen die den Schlitz 11 bildenden Stopfenflächen bei nichtmontiertem Stopfen 9 geringfügigen Abstand voneinander auf.

Ist der Bolzen aber in die Bohrung 5 des Bolzens 3 ordnungsgemäß eingeschoben (siehe Fig. 1), so wird der Stopfen 9 durch die Bohrungswandung derart zusammengepreßt, daß die den Schlitz 11 benachbarten Stopfenflächen abdichtend unter gegenseitiger Vorspannung aneinanderliegen.

Der Stopfen 9 ist zu seinem in Einsteckrichtung vorderen Ende hin konisch verjüngt ausgebildet, so daß diese Konusfläche eine Einführhilfe beim Einpressen des Stopfens 9 bildet.

Die Verformung des Stopfens 9 nach dem Einstecken. in die Bohrung 5 ist derart, daß der Stopfen, wie aus Fig. 1 ersichtlich, in der Montagelage eine zylindrische Form aufweist.

Gegenüber der Ausführungsform gemäß Fig. 2 und 3, bei der der Konuswinkel über die gesamte Länge des Stopfens gleichbleibend ist, ist gemäß den Ausführungsbeispielen Fig. 4 bis 7 zunächst das vordere Ende des Stopfens 9 relativ stark konisch verjüngt, während im Mittelbereich nahezu zylindrisch ausgebildet, während der außenliegende Endbereich entgegengerichtet konisch ausgebildet ist.

Der zylindrische Mittelbereich beginnt etwa in Höhe des Überganges von Schlitz 11 und Kanal 10 und endet etwa in Höhe der Mitte des Kanales 10 in Längsrichtung gesehen. Durch diese Ausbildung werden Zonen unterschiedlicher Vorspannung am Stopfen 9 eingestellt, was sich im Betrieb als günstig herausgestellt hat.

Der Kanal 10 ist im übrigen zum Schlitz 11 hin mindestens im unmittelbar anschließenden Bereich kegelförmig zugespitzt.

Beim Ausführungsbeispiel gemäß Fig. 6 und 7 reicht der Schlitz 11 nicht über die gesamte Breite des Stopfens 9, sondern er endet vor der Stopfenseitenwandung.

Dadurch kann der Schlitz beim Einführen des Stopfens 9 in die Bohrung 5 nicht verformt werden.

Zudem ist der Schlitz 11 endseitig über einen Teil seiner Länge zu einem etwa ovalen Sackloch 12 aufgeweitet, so daß das den Schlitz 11 ausbildende Werkzeug durch dieses Sackloch geführt ist.

Die Herstellung des Stopfens 9 ist damit erleichtert.

Der Stopfen 9 besteht im übrigen aus elastischem Gummimaterial.

Zur Befüllung des Schmiermittel-Reservoirs in dem Bolzen 3 wird zunächst der Stopfen 9 in die Mündung der Bohrung 5 eingesteckt und anschließend über eine durch den Kanal 10 und den Schlitz 11 geführte Kanüle Vakuum gezogen.

Dabei ist dann festzustellen, ob die Dichtungen 8 und der Stopfen 9 ordnungsgemäß abdichten.

Anschließend wird dann durch die Kanüle Schmiermittel zugeführt, wobei das Schmiermittel durch das Vakuum in die Bohrung 5, die Querbohrung 6 und den Schlitz 7 bis zu den Dichtungen 8 hin eingesogen wird.

Desweiteren wird das Schmiermittel unter Druck eingebracht, so daß eine weitestgehend vollständige Befüllung des Schmiermittel-Reservoirs bis hin zu den Dichtungen 8 erreicht wird.

Die Kanüle wird dann aus dem Schlitz 11 und dem Kanal 10 entfernt, wobei die den Schlitz bildenden Stopfenflächen dann dichtschließend unter Vorspannung aneinanderliegen.

Selbstverständlich könnte die Befüllung des Schmiermittel-Reservoirs auch in der Weise erfolgen, daß das Schmiermittel bei auf der Seite stehender Kette zunächst eingefüllt und dann erst die Bohrung 5 durch den Stopfen verschlossen wird, wobei durch den Kanal 10 und den Schlitz 11 eine Entlüftungskanüle gesteckt werden muß, wenn der Stopfen eingedrückt wird.

**Patentansprüche**

1. Scharniergelenk einer Gleiskette mit einer abgedichteten und geschmierten Lagervorrichtung, die mindestens zwei Glieder schwenkbar verbindet, wobei ein Bolzen und eine diesen aufnehmende und auf dessen Außenfläche gleitende Buchse vorgesehen ist, ferner die zwischen Bolzen und Buchse vorgesehene Lagerfläche mit einem in der Lagervorrichtung angeordneten von außen zugänglichen Schmiermittelreservoir verbunden ist, dessen offenes Ende durch einen elastischen, mit einem Kanal versehenen Stopfen verschließbar ist, dadurch gekennzeichnet, daß der Kanal (10) nur über einen Teil der Länge des Stopfens (9) verläuft und nur außenliegend offen mündet, und daß das innenliegende sacklochartige Ende des Kanales (10) mit einem von dort bis zum innenliegenden Stopfenende verlaufenden, mindestens annähernd über die gesamte Stopfenbreite ausgebildeten Schlitz (11) in Verbindung steht, wobei die den Schlitz (11) bildenden Stopfenflächen bei in das offene Ende des Schmiermittelreservoirs eingesetztem Stopfen (9) fest aufeinander gepreßt sind.

2. Scharniergelenk nach Anspruch 1, dadurch gekennzeichnet, daß der Bolzen (3) eine das Schmiermittelreservoir bildende, einseitig offene Bohrung (5) aufweist, die über einen Querkanal (6) mit der Lagerfläche verbunden ist, und der Stopfen (9) in die Mündung der Bohrung (5) eingepreßt ist.

3. Scharniergelenk nach Anspruch 1 oder 2, dadurch gekennzeichnet, daß der Stopfen (9) konisch ausgebildet und mit dem verjüngten Ende voraus in die Öffnung bzw. Mündung eingesetzt ist, wobei der Stopfen (9) in der Einbaulage mindestens fast vollkommen zylindrisch verformt ist.

4. Scharniergelenk nach einem der Ansprüche 1 bis 3, dadurch gekennzeichnet, daß der Stopfen (9) vom innenliegenden Ende her in der Schlitzlänge entsprechender Länge einen relativ großen Konuswinkel bildet, im folgenden Bereich mindestens einen sehr flachen Konuswinkel aufweist und im mündungsnahen Bereich entgegengesetzt konisch sich außen verjüngend ausgebildet ist (Fig. 4 bis 7).

5. Scharniergelenk nach einem der Ansprüche 1 bis 4, dadurch gekennzeichnet, daß der Kanal (10) zum Schlitz (11) hin, mindestens im unmittelbar anschließenden Bereich kegelförmig ausläuft.

6. Scharniergelenk nach einem der Ansprüche 1 bis 5, dadurch gekennzeichnet, daß der Schlitz (11) vor der Stopfenseitenwandung endet (Fig. 6 + 7).

7. Scharniergelenk nach Anspruch 6, dadurch gekennzeichnet, daß der Schlitz (11) endseitig über einen Teil seiner Länge zu einem ovalen Sackloch (12) aufgeweitet ist (Fig. 6 + 7).

8. Scharniergelenk nach einem der Ansprüche 1 bis 7, dadurch gekennzeichnet, daß in den Kanal (10) und den Schlitz (11) eine Kanüle den Stopfen (9) axial durchdringend, entfernbar eingesetzt ist, die außenliegend eine Druckmittelleitungs-Kupplung aufweist.

9. Scharniergelenk nach einem der Ansprüche 1 bis 8, dadurch gekennzeichnet, daß der Stopfen (9) aus elastischem Gummi besteht.

**Claims**

1. A hinge joint in a crawler track, with a sealed and lubricated bearing device swivellably connecting at least two links, including a pin and a bush which receives the pin and slides on its outer surface and additionally the bearing surface provided between the pin and the bush is connected to a lubricant reservoir which is disposed in the bearing device and is accessible from outside and whose open end can be closed by an elastic stopper provided with a channel, characterised in that the channel (10) extends only over a part of the length of the stopper (9) and has an open mouth only at the outer end, and that the inner end of the channel (10), forming a blind hole, communicates with a slot (11) which extends from the hole to the inner end of the stopper and is formed at least over substantially the entire width of the stopper, the surfaces of the stopper which form the slot (11) being pressed firmly together when the stopper (9) is inserted into the open end of the lubricant reservoir.

2. A hinge joint according to Claim 1, characterised in that the pin (3) has a bore (5) which forms the lubricant reservoir and is open at one end and which is in communication via a transverse channel (6) with the bearing surface, and the stopper (9) is pressed into the mouth of the bore (5).

3. A hinge joint according to Claim 1 or 2, characterised in that the stopper (9) is conical and is inserted with the tapered end foremost into the opening or mouth, and in the inserted position the stopper (9) is deformed at least substantially completely into a cylinder.

4. A hinge joint according to any one of Claims 1 to 3, characterised in that the stopper (9) is formed from the inner end, over a length corresponding to the length of the slot, with a relatively large conical angle, in the following region has at least a very flat conical angle, and in the region near the mouth has a shape forming an oppositely externally tapering cone (Figures 4 to 7).

5. A hinge joint according to any one of Claims 1 to 4, characterised in that at least the end of the channel (10) adjoining the slot (11) is of conical form.

6. A hinge joint according to any one of Claims 1 to 5, characterised in that the slot (11) ends short of the side wall of the stopper (Figures 6 and 7).

7. A hinge joint according to Claim 6, characterised in that, over part of its length, the end of the slot (11) is widened to form an oval pocket-shaped cavity (12) (Figures 6 and 7).

8. A hinge joint according to any one of Claims 1 to 7, characterised in that a conduit passing axially through the stopper (9) is removably inserted into the channel (10) and the slot (11), and externally has an external coupling for a pressure medium pipe.

9. A hinge joint according to any one of Claims 1 to 8, characterised in that the stopper (9) is made of elastic rubber.

**Revendications**

1. Articulation à charnière d'une chaîne de voie comportant un dispositif à palier étanche et lubrifié qui relie au moins deux éléments de manière qu'ils puissent pivoter et comprend une cheville et une douille qui entoure cette cheville et glisse sur sa surface, la surface de palier comprise entre la cheville et la douille étant reliée à un réservoir à lubrifiant qui est ménagé dans le dispositif à palier et est accessible de l'extérieur et dont l'extrémité ouverte peut être fermée par un bouchon élastique muni d'un conduit, caractérisée en ce que ce conduit (10) ne s'étend que sur une partie de la longueur du bouchon (9) et n'est ouvert que vers l'extérieur et en ce que l'extrémité en cul-de-sac de ce conduit (10) située à l'intérieur communique avec une fente (11) qui va jusqu'à l'extrémité du bouchon située à l'intérieur et s'étend au moins presque sur toute la largeur du bouchon, les surfaces du bouchon qui forment cette fente (11) étant pressées fortement l'une sur l'autre lorsque le bouchon (9) est engagé dans l'extrémité ouverte du réservoir à lubrifiant.

2. Articulation à charnière selon la revendication 1, caractérisée en ce que la cheville (3) comporte un alésage (5) ouvert d'un côté qui constitue le réservoir à lubrifiant et est relié par un conduit transversal (6) à la surface de palier, le bouchon (9) étant introduit par pression dans l'embouchure de l'alésage (5).

3. Articulation à charnière selon l'une des revendications 1 ou 2, caractérisée en ce que le bouchon (9) a une forme tronconique et est d'abord engagé par son extrémité la moins large dans l'ouverture ou embouchure, le bouchon (9) mis en place étant déformé de manière à être au moins presque complètement cylindrique.

4. Articulation à charnière selon l'une des revendications 1 à 3, caractérisée en ce qu'à partir de son extrémité intérieure et sur une longueur correspondant à la longueur de la fente le bouchon (9) a un angle de cône relativement grand, puis dans la zone suivante au moins, un angle de cône très faible et, dans la zone de l'embouchure, un angle de cône orienté en sens inverse, la partie la moins large étant du côté de l'extérieur (Figures 4 à 7).

5. Articulation à charnière selon l'une des revendications 1 à 4, caractérisée en ce que le conduit (10) s'amincit en tronc de cône vers la fente (11) au moins dans la zone contiguë à cette fente.

6. Articulation à charnière selon l'une des revendications 1 à 5, caractérisée en ce que la fente (11) se termine avant d'atteindre la paroi latérale du bouchon (Figures 6 à 7).

7. Articulation à charnière selon la revendication 6, caractérisée en ce que, sur une partie de sa longueur à son extrémité, la fente s'élargit pour former un trou borgne (12) de secteur oval (Figures 6 à 7).

8. Articulation de charnière selon l'une des revendications 1 à 7, caractérisée en ce qu'une canule est engagée, de manière à être amovible, dans le conduit (10) et la fente (11) qu'elle traverse dans le sens axial et comporte à l'extérieur un dispositif d'accouplement avec une canalisation pour milieu de pression.

9. Articulation à charnière selon l'une des revendications 1 à 8, caractérisée en ce que le bouchon (9) est en caoutchouc élastique.

Fig.1

0 069 799

Fig.2

*9*

*10*

*11*

Fig.3

*9*

*11*

*10*

Fig.5

*9*

*11*

Fig.4

*9*

*10*

*11*

Fig.7

*9*

*11*

*12*

Fig.6

*10*

*12*

*9*

*11*